# EUROPÄISCHE PATENTSCHRIFT

(11) **EP 3 784 017 B1**
(45) Veröffentlichungstag und Bekanntmachung des Hinweises auf die Patenterteilung: **11.06.2025**
(21) Anmeldenummer: 19720100.7
(22) Anmeldetag: 23.04.2019
(51) Int. Cl.: A01D 34/416, A01D 34/84, A01D 34/90

(54) **HANDWERKZEUGMASCHINE IN FORM EINES RASENTRIMMERS ODER FREISCHNEIDERS**
HAND-HELD POWER TOOL IN THE FORM OF A GRASS TRIMMER OR BRUSHCUTTER
MACHINE-OUTIL À MAIN SE PRÉSENTANT SOUS LA FORME D'UN TAILLE-BORDURES OU D'UNE SCIE DE DÉGAGEMENT

(30) Priorität: 22.04.2018 DE 102018206177
(43) Veröffentlichungstag der Anmeldung: 03.03.2021
(73) Patentinhaber: Robert Bosch GmbH, 70442 Stuttgart (DE)
(72) Erfinder: SOLTESZ, Robert, 3530 Miskolc (HU); KAZUP, David Gabor, 3534 Miskolc (HU); NAGY, Attila, 3521 Miskolc-Szirma (HU)
(86) Internationale Anmeldenummer: PCT/EP2019/060325
(87) Internationale Veröffentlichungsnummer: WO 2019/206880

(56) Entgegenhaltungen:
- WO-A1-2009/153752
- US-A- 2 855 742
- US-A- 5 603 205
- US-A- 5 826 667

## Beschreibung

### Stand der Technik

Es sind bereits Handwerkzeugmaschinen in Form eines Rasentrimmers oder Freischneiders nach dem Oberbegriff des Anspruchs 1 bekannt. Ferner sei auf die Druckschriften US 5 603 205 A, WO 2009/153751 A1, US 5 826 667 A und US 2 855 742 A verwiesen.

### Offenbarung der Erfindung

Die Erfindung betrifft eine Handwerkzeugmaschine in Form eines Rasentrimmers oder Freischneiders mit den Merkmalen des Anspruchs 1.

Es wird vorgeschlagen, dass zumindest in einer Horizontalschnittkonfiguration des Rasentrimmers oder Freischneiders, die Mitten- bzw. Längsachse und die Rotationsachse einen Achsversatz zueinander aufweisen und/oder sich nicht schneiden. Die Mittenachse bzw. Längsachse verläuft zumindest im Wesentlichen entlang einer Mittenlinie bzw. Zentrumgsachse der Distanzeinheit oder eines Hauptrohrs des Rasentrimmers. Dadurch ist der Schneidkopf versetzt zum Distanzrohr ausgerichtet. Dies ermöglicht, dass das Hauptrohr und/oder die Distanzeinheit den Schneidkopf in der Horizontalschnittkonfiguration nicht mehr im Wesentlichen vor dem Nutzer beabstanden, sondern auch seitlich versetzt zu ihm anordnen. Das Hauptrohr oder die Distanzeinheit werden quasi quer zu einer Hauptschnitt- oder Hauptlaufrichtung gehalten. Damit können bequem Schnitte entlang von Mauern oder dergleichen durchgeführt werden. Die Hauptlaufrichtung ist quasi versetzt zur Hauptbewegungsrichtung des Schneidkopfs angeordnet.

Ferner wird vorgeschlagen, dass eine Winkelhalbierende einer V-förmigen Griffeinheit und die Rotationsachse ebenfalls einen Achsversatz aufweisen und/oder dass eine, durch eine Vertikale hier in Y-Achsrichtung und die Winkelhalbierende aufgespannt Ebene, einen Versatz zur Rotationsachse des Schneidwerkzeugs aufweist.

Es wird ein Rasentrimmer oder Freischneider vorgeschlagen, aufweisend ein drehbares Schneidwerkzeug, insbesondere einen Schneidfaden, einen Schneidteller oder ein Schneidblatt, wobei die Rotationsachse des Schneidwerkzeugs die Y-Achse eines Koordinatensystems definiert und eine Horizontalschnittebene des Schneidwerkzeugs normal zur Rotationsachse die X- und Z-Achsen des Koordinatensystems definieren, wobei die Z-Achse eine Hauptschnittrichtung des Trimm- oder Schneidkopfs bzw. des Rasentrimmers oder Freischneiders definiert, ferner aufweisend ein Hauptrohr an dem eine Griffeinheit angeordnet ist, welche über eine Distanzeinheit, die prinzipiell auch einstückig mit dem Hauptrohr ausgebildet sein kann, insbesondere eine verlängerbare Distanzeinheit, bevorzugt eine Teleskopeinheit, mit dem Trimm- oder Schneidkopf verbunden ist. Es wird vorgeschlagen, dass zumindest in einer Horizontalschnittkonfiguration des Rasentrimmers oder Freischneiders die Längsachse des Hauptrohres einen Winkel mit einer durch die Y- und Z-Achse aufgespannten Ebene einschließt, insbesondere einen Winkel von 10-80°, bevorzugt von 30-60°, besonders bevorzugt von 40-50°, ganz besonders bevorzugt von 45° einschließt. Dadurch können gleichermaßen die zuvor beschriebenen Vorteile erreicht werden. Prinzipiell ist aber auch der Schwerpunkt durch eine derartige Konfiguration mittig vor dem Körper verlagert und kann über zwei insbesondere v-förmig angeordnete Handgriffe ausgehend insbesondere vom Schwerpunkt angenehm und gleichmäßig auf beide Hände übertragen werden.

Des Weiteren wird ein Rasentrimmer oder Freischneider vorgeschlagen, aufweisend ein Hauptrohr an dem eine Griffeinheit angeordnet ist, welche über eine Distanzeinheit, insbesondere eine verlängerbare Distanzeinheit, bevorzugt eine Teleskopeinheit, mit einem Trimm- oder Schneidkopf, verbunden ist. Es wird vorgeschlagen, dass in einer Horizontalschnittkonfiguration des Rasentrimmers oder Freischneiders die auf die Horizontalschnittebene projizierte Längsachse des Hauptrohres und/oder der Distanzeinheit einen Winkel mit einer insbesondere auf die Horizontalschnittebene projizierten Hauptschnittrichtung des Trimm- oder Schneidkopfs bzw. des Rasentrimmers oder Freischneiders einschließt, insbesondere einen Winkel von 10-80°, bevorzugt von 30-60°, besonders bevorzugt von 45° einschließt. Durch einen derartigen Winkel kann einerseits eine gute Sicht auf den Schneidkopf gewahrt werden, anderseits wird auch ein ausreichender Versatz des Schneidkopfs relativ zur Gangrichtung des Nutzers bzw. einer Winkelhalbierenden der Griffeinheit bereitgestellt. Dadurch kann der Schneidkopf die halbe Schulterbreite eines Nutzers überragen und somit bequem Schnitte entlang von hohen Mauern oder Hecken durchgeführt werden.

Ferner wird vorgeschlagen, dass die Griffeinheit eine V-förmige Anordnung mit einem Öffnungswinkel aufweist, wobei die auf die Horizontalschnittebene projizierte Winkelhalbierende des Öffnungswinkels parallel zur Hauptschnittrichtung des Schneidkopfs ausgerichtet ist oder dass zumindest eine auf die Horizontalschnittebene projizierte Winkelhalbierende des Öffnungswinkels eine Hauptschnittrichtungsachse bzw. Haupt-Bediener-Bewegungsrichtung vorgibt. Es wird vorgeschlagen, dass der Schneidkopf einen Parallelversatz zur Hauptschnittrichtungsachse aufweist, insbesondere ≥ ½ mal den Griffabstand oder ≥ ½ mal eine Schulterbreite eines Benutzers, bevorzugt ≥ 100 mm, insbesondere ≥ 150 mm, besonders bevorzugt ≥ 200 mm, insbesondere zunehmender bei verlängerter Teleskopierung der Teleskopeinheit. Wie bereits angedeutet können dadurch bequem Schnitte entlang auf von Mauern oder Büschen durchgeführt werden. Der Schwerpunkt kann im Bereich einer Schwenkeinheit der Griffeinheit angeordnet sein, was das Gewicht insbesondere trotz der asymmetrischen Rasentimmerausrichtung gleichermaßen auf beide Griffe bzw. Hände verteilt. Somit kann ein ermüdungsgemindertes Arbeit gewährleistet werden.

Ferner wird vorgeschlagen, dass der Schneidkopf einen Winkelversatz aufweist, bzw. abgewinkelt zu einer Bearbeitungseinheitsebene angeordnet ist, welche zumindest in einer Horizontalschnittkonfiguration des Rasentrimmers durch eine die Längsachse des Hauptrohres schneidende Parallelachse zur Rotationsachse der Bearbeitungseinheit und die Längsachse des Hauptrohres bzw. der Distanzeinheit aufgespannt wird, insbesondere einen Winkelversatz von bzw. abgewinkelt ist um 15-75°, bevorzugt um 45°.

Außerdem geht die Erfindung aus von eine Handwerkzeugmaschine, bevorzugt ein Gartengerät, insbesondere ein Rasentrimmer oder Freischneider aufweisend eine Griffeinheit und eine Bearbeitungseinheit, welche über eine Distanzeinheit, insbesondere eine verlängerbare Distanzeinheit, bevorzugt eine Teleskopeinheit, miteinander verbunden sind. Es wird vorgeschlagen, dass die Griffeinheit zwei Handgriffe aufweist, wobei freie Handgriffenden einander X-/V-förmig zugerichtet sind und/oder unfreie Handgriffenden mittels einer Verbindungseinheit, insbesondere einer Schwenkeinheit, V-förmig verbunden sind. Dies verbessert die Ergonomie beim Greifen und Nutzen der Handwerkzeugmaschine.

Es wird vorgeschlagen, dass ein Schwerpunkt der Handwerkzeugmaschine in einem Bereich der zumindest V-förmig ausrichtbaren Verbindungseinheit der Handgriffe, insbesondere im Bereich der Schwenkeinheit und/oder entlang der Längsachse des Hauptrohres zum Liegen kommt. Dadurch ist eine gleichmäßige Belastungsverteilung auf beide Nutzerarme möglich.

Es wird vorgeschlagen, dass zur Herstellung eines zumindest im Wesentlichen um die Längsachse eines Hauptrohres wirkenden Momentengleichgewichts, die Bearbeitungseinheit zur einen und die Griffeinheit und/oder der zweite Handgriff und/oder die Verbindungseinheit und/oder die Schwenkeinheit (20) zur anderen Seite des Hauptrohres verlagert angeordnet sind. Dadurch entsteht ein Momentengleichgewicht um die Längsachse des Hauptrohres. Der Bediener muss also keine Kraft aufwenden um die Handwerkzeugmaschine um die Längsachse zu stabilisieren.

### Zeichnung

Weitere Vorteile ergeben sich aus der folgenden Zeichnungsbeschreibung. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: Eine erfindungsgemäße Handwerkzeugmaschine, in Form eines Gartengeräts, hier in Form eines Rasentrimmers oder Freischneiders, in einer Frontansicht.
- Fig. 2: den Rasentrimmer in drei Ansichten, jeweils in einer Horizontalschnittkonfiguration,
- Fig. 3: den Rasentrimmer in drei Ansichten,
- Fig. 4: den Rasentrimmer in drei Anordnungen, bzw. in einer Horizontalschnittkonfiguration, in einer Kantenschneidkonfiguration und einer Flachschnittkonfiguration,
- Fig. 5: zwei Ansichten einer Schwenk- und Drehvorrichtung in je einer Explosionsdarstellung,
- Fig. 6: eine Verstellvorrichtung zu Teleskopierung bzw. Höhenverstellung des Rasentrimmers in einer Explosionsdarstellung,
- Fig. 7: einen Ausschnitt aus Figur 6 in verschiedenen Ansichten,
- Fig. 8: den Rasentrimmer in einer kompakten Lager- oder Transportkonfiguration
- Fig. 9: eine alternative Schwenk-, Dreh-, und Höhenverstellvorrichtung.

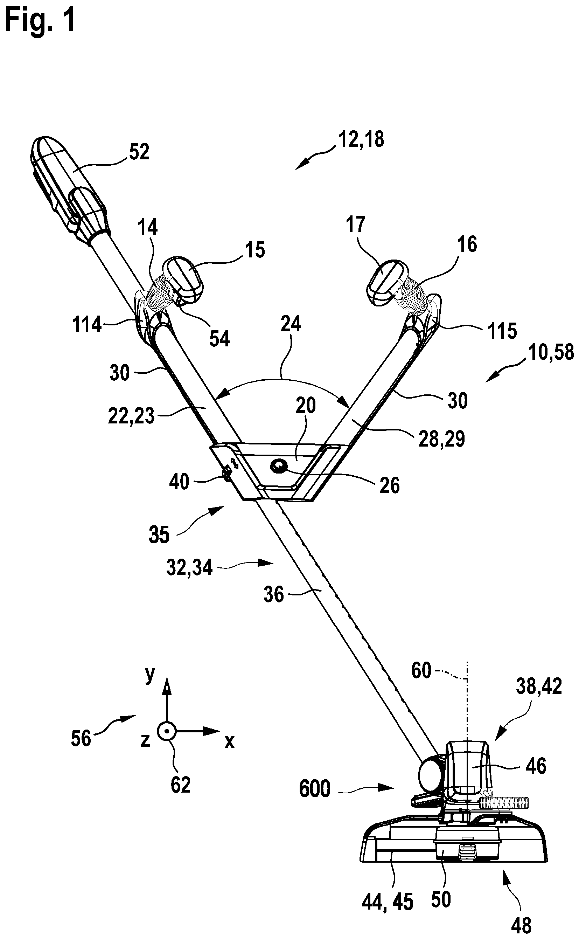

Figur 1 zeigt eine Handwerkzeugmaschine in Form eines Pflanzenschneidgeräts oder eines Gartengeräts, hier in Form eines Rasentrimmer 10 oder Freischneider. Der Rasentrimmer 10 oder Freischneider weist eine Griffeinheit 12 auf. Die Griffeinheit 12 umfasst zumindest einen ersten Handgriff 14. Ferner umfasst die Griffeinheit 12 einen zweiten Handgriff 16. Der erste Handgriff 14 ist mit dem zweiten Handgriff 16 über eine Verbindungseinheit 18 verbunden. Der zweite Handgriff 16 ist verlagerbar bzw. ausklappbar zum ersten Handgriff 14 ausgebildet. Der zweite Handgriff 16 kann über eine Schwenkeinheit 20 relativ zum ersten Handgriff 14 bzw. relativ zu einem Hauptrohr 22 verschwenkt werden. Der Schwenkwinkel ist ein spitzer Winkel 24. Dadurch nimmt die Griffeinheit 12 zumindest in einer Arbeitsposition eine V-förmige Stellung ein. Die Schwenkeinheit 20 stellt einen Teil der Verbindungseinheit 18 bzw. der Griffeinheit 12 dar. Die Schwenkeinheit 20 ist über das Auslöseelement 26 lösbar. Dadurch kann durch einen Nutzer das Aus- und/oder Einklappen initiiert werden. Die Griffeinheit 12 ist an dem Hauptrohr 22 bzw. einem Gestänge des Rasentrimmers 10 befestigt. Die Griffeinheit 12 kann auch ein Teil dieses Hauptrohres 22 oder Gestänges bilden. Der zweite Handgriff 16 ist über ein Rohr 28 mit der Schwenkeinheit 20 verbunden. Das Rohr 28 stellt gewissermaßen ein Teil der Griffeinheit 12 bzw. der Verbindungseinheit 18 dar. Das Hauptrohr 22 bzw. das Rohr 28 sind jeweils zumindest teilweise von Verbindungs- oder Versteifungselementen 30 umgeben. Diese können in die jeweiligen Handgriffe 14, 16 übergehen oder auch einstückig mit den Handgriffen 14,16 ausgebildet sein. Sie versteifen die Position der Handgriffe 14, 16. Sie umgeben zumindest teilweise das Hauptrohr 22 bzw. das Rohr 28.

Über eine Distanzeinheit 32 oder Teleskopeinheit 34, hier ein weiteres Rohr 36, insbesondere ein relativ zum Hauptrohr 22 teleskopierbares Rohr 36, ist die Griffeinheit 12 mit einer Bearbeitungseinheit 38 verbunden. Die Distanzeinheit 32 verbindet die Griffeinheit 12 und die Bearbeitungseinheit 38 miteinander und beabstandet sie zueinander. Die Distanzeinheit 32 ist verschiebbar zur Griffeinheit 12 bzw. dem Hauptrohr 22 ausgebildet. Durch betätigen einer Verstellvorrichtung 40 ist die Distanzeinheit 32 teleskopierbar. Beispielsweise greifen hier nicht dargestellte Formschlusselemente (z.B. Rastmittel) in korrespondierende Formschlusselemente an der Distanzeinheit 32. Über die Verstellvorrichtung 40 werden diese außer bzw. in Eingriff gebracht. Damit lässt sich der Rasentrimmer 10 oder Freischneider an unterschiedliche Bedienhöhen und/oder -positionen anpassen oder kompakt verstauen bzw. transportieren. Die Bearbeitungseinheit 38 umfasst einen Schneidkopf 42. Der Schneidkopf 42 treibt beim Freischneider ein Messer (hier nicht dargestellt), eine Schneidscheibe mit beispielsweise beweglichen Schneidmessern (Hybrid Freischneider/Trimmer - hier ebenfalls nicht dargestellt), oder beim Rasentrimmer 10 einen Schneidfaden 44 an. Aufgrund der hohen Rotationsgeschwindigkeit des Schneidfadens 44 wird dieser durch Zentrifugalkräfte gestrafft und kann dadurch ein Schnittgut, insbesondere Gras, schneiden oder abschlagen. Alternativ kann die Bearbeitungseinheit 38 aber auch ein Heckenscherenvorsatz, ein Kettensägenvorsatz, ein Astscherenvorsatz, einen Sprühvorsatz oder dergleichen mehr sein. Diese können wahlweise teleskopierbar oder mit fixer Distanz zur Griffeinheit 12 oder zum Hauptrohr 22 ausgebildet sein. Der Schneidkopf 42 umfasst im vorliegenden Beispiel eine Antriebseinheit 46 und eine Schneideinheit 48. Die Antriebseinheit 46 wird hier durch einen Motor gebildet, insbesondere einen Elektromotor. Die Schneideinheit 48 umfasst eine Spule 50 an der der Schneidfaden 44 anortenbar bzw. aufgewickelt ist. Sofern die Antriebseinheit 46 die Spule 50 bzw. den aus der Spule 50 herausragenden Schneidfaden 44 rotatorisch antreibt, kann mit dem Schneidfaden 44 in bekannter Weise Gras bzw. Rasen oder auch Buschwerk geschnitten bzw. getrimmt werden. Über die Distanzeinheit 32 können beim Rasentrimmer 10 oder Freischneider bequem Schnitte durchgeführt werden, während der Benutzer steht oder läuft und z.B. den Rasentrimmer 10 über eine Rasenfläche schwenkt; ebenso können Arbeiten an Hecken oder Bäumen, dann typischerweise mit den vorgenannten Vorsätzen oder weiteren entsprechenden Vorsätzen, vorgenommen werden. Die Antriebseinheit 46 wird beispielhaft durch einen Akku (hier nicht dargestellt) mit Energie versorgt. Der Akku ist am vom Schneidkopf 42 beabstandeten Ende des Hauptrohres 22 an einer Akkuaufnahme 52 angeordnet, was hier der verbesserten Verteilung des Gleichgewichts bzw. der Verbesserung der Ergonomie des Rasentrimmers 10 dient. Der Akku stellt sozusagen ein Gegengewicht zum Motor bzw. dem Schneidkopf 42 dar. Dadurch kann der Schwerpunkt des Rasentrimmers in den Bereich 53 der Griffeinheit 12 oder in den Bereich der Schwenkeinheit 20 bzw. der Verbindungseinheit 18 verschoben werden. Prinzipiell kann der Akku aber auch an einer anderen Stelle angeordnet sein. Zur Aktivierung des Motors kann ein Schalter 54, insbesondere ein Gasgebeschalter von einem Anwender betätigt werden. Schalt- und/oder Steuersignale und/oder der Energietransport zwischen Griffeinheit 12 und Schneidkopf 42 erfolgen hier beispielhaft über nicht dargestellte Kabel, die innerhalb des Hauptrohres 22 und der Distanzeinheit 32 verlegt sein können. Selbstverständlich kann das Gartengerät eine Steuer- oder Regelung aufweisen, welche die Steuer- oder Regelung des Motors ausgehend zumindest von Signalen des Schalters 54 übernimmt und/oder die den Akku- oder Motorzustand und/oder dergleichen überwacht, steuert oder regelt. Ebenso kann bei derartigen Gartengeräten der Motor auch an einer anderen Stelle, beispielsweise am vom Schneidkopf 42 beabstandeten Ende des Hauptrohres 22 angeordnet sein (also im Bereich der hier dargestellten Akkuschnittstelle 52). Dieser kann den Schneidkopf 42, beispielsweise über eine im Hauptrohr 22 und der Distanzeinheit 32 bzw. dem weiteren Rohr 36 verlaufende Kraftübertragungswelle, mit Antriebsenergie versorgen.

Zur besseren Übersichtlichkeit und zur Orientierung auch in den anderen Zeichnungen ist ein Koordinatensystem 56 abgebildet. Bezogen auf den hier dargestellten Schneidkopf 42 bzw. Rasentrimmer 10 in seiner Horizontalschnittkonfiguration 58, rotiert die Schneideinheit 48 bzw. die Spule 50 und/oder der Schneidfaden 44 um die Rotationsachse 60 bzw. die Y-Achse. Eine Horizontalschnittebene wird durch die X- und Z-Achse aufgespannt. Das ist hier auch die Ebene in der der Schneidfaden 44 rotiert. Die Z-Achse welche aus der Betrachtungsebene der Zeichnung hinaus verläuft definiert zur besseren Erläuterung auch eine Hauptschnittrichtung 62. Diese Hauptschnittrichtung 62 definiert beispielhaft den Gerade-Aus-Gang eines Benutzers des Rasentrimmers 10.

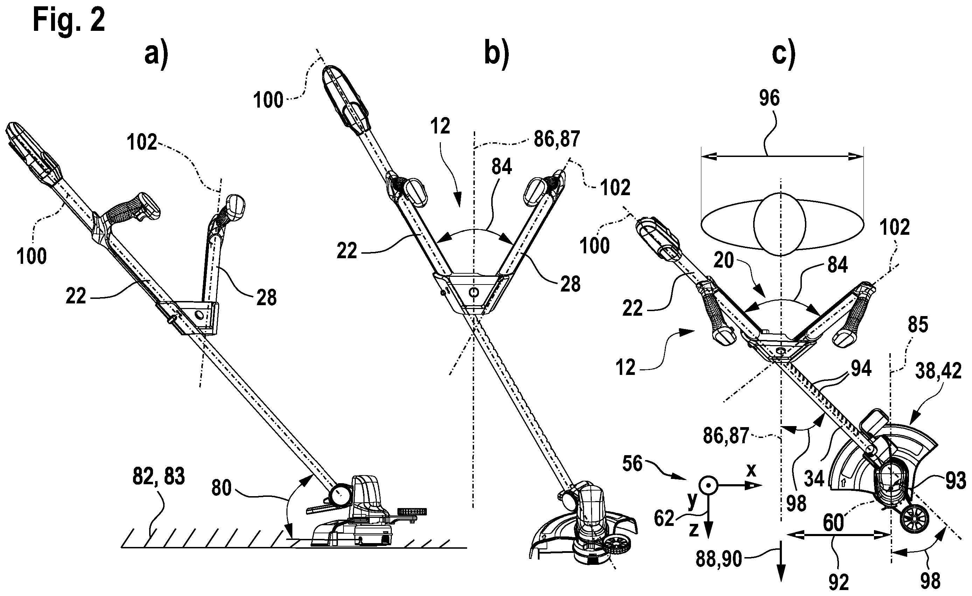

Figur 2 zeigt den Rasentrimmer 10 aus Figur 1 in drei Ansichten a), b), c), jeweils in der Horizontalschnittkonfiguration 58. Diese ist zum Ausführen von Horizontalschnitten, also Schnitten im Wesentlichen parallel zur Bearbeitungsfläche bzw. - ebene, bzw. dem Boden vorgesehen. In der Ansicht a) ist der Rasentrimmer 10 zumindest teilweise in einer Seitenansicht gezeigt. Die Ansicht b) zeigt den Rasentrimmer 10 in einer leicht nach vorne gekippten Frontansicht. Die Ansicht c) zeigt den Rasentrimmer 10 in einer Draufsicht. In der dieser Ansicht ist ebenfalls das Koordinatensystem 56 analog zu Figur 1 dargestellt, sowie die Hauptschnittrichtung 62 in z-Achsrichtung dargestellt. Bezugszeichen sind für Gleichteile aus der Figur 1 im Wesentlichen nicht erneut vergeben, was auch für die weiteren Figuren gilt. Ergänzend sind aber gewisse Winkel, Achsen, Abstände und Richtungen eingezeichnet. Prinzipiell sei angemerkt, dass im Folgenden Längsachsen von Rohren, Griffen oder ähnlichen, im Wesentlichen länglichen Bauteilen, zumindest im Wesentlichen als entlang der Mittenachse oder Zentrumsachse der Rohre, Griffe oder ähnlichen, im Wesentlichen länglichen Bauteilen verlaufend, zu verstehen sind. Somit entspricht eine Längsachse im Wesentlichen der Mittenachse entlang der Haupterstreckungsrichtung des jeweiligen Bauteils. Entlang des Hauptrohres 22, bzw. entlang der Distanzeinheit 32, der Teleskopeinheit 34 oder des weiteren Rohres 36, verläuft eine Längsachse 100. Eine Längsachse 102 verläuft entlang der Mittenachse des Rohres 28 an dem der zweite Handgriff 16 befestigt ist. Ein Schwenkwinkel 80 zwischen der Längsachse 100 und einer Bearbeitungsebene 82 beträgt rund 15-65°, hier rund 48°. In anderen vorteilhaften Konfigurationen kann er 36° oder 24° betragen. Ein Winkel 84 zwischen den Längsachsen 100 und 102 des Hauptrohres 22 und des weiteren Rohres 36 in der Ansicht b) beträgt rund 45-75°, insbesondere rund 60°. Ausgehend von einer durch die Y- und Z-Achse (vgl. Ansicht c)) aufgespannten Ebene 85, kommt die Winkelhalbierende 87 des Winkels 84 in einer Parallelebene 86 zur Ebene 85 zum Liegen. Die Winkelhalbierende 87 bzw. Parallelebene 86 schneidet die Schwenkeinheit 20 und das Auslöseelement 26 mittig. Die Griffeinheit 12 bzw. Schwenkeinheit 20 ist V-förmig ausgerichtet. Rechts und links der Winkelhalbierenden 87 erstrecken sich die Schenkel (Hauptrohr 22 und Rohr 28) des V's, an denen die Handgriffe 14, 16 angeordnet sind. In der Draufsicht rechts ist zudem ein Nutzer mit dem Rasentrimmer 10 bzw. Freischneider in einer für den Gebrauch üblichen Stellung abgebildet. Der Blick des Nutzers ist in Z-Achse orientiert. Die Körpermitte des Nutzers ist im Bereich der Parallelebene 86, bzw. der Winkelhalbierenden 87 der Griffeinheit 12. Der Pfeil 88 symbolisiert eine Vorzugslaufrichtung des Nutzers entlang einer Vorzugslaufachse 90. Die Vorzugslaufachse 90 ist parallel zur Z-Achse ausgerichtet und weist einen Versatz 92 auf. Entsprechendes gilt für die Parallelebene 86 (in der auch die Winkelhalbierende 87 zum liegen kommt) zur Ebene 85. Der Versatz 92 ist in Abhängigkeit einer Teleskopierstellung der Teleskopeinheit 34 variabel. An der Teleskopeinheit 34 bzw. dem weiteren Rohr sind in dieser Ansicht auch Formschlusselemente 94 die der Verrastung beim Teleskopieren dienen, sichtbar. Der Versatz 92 beträgt etwas mehr als eine halbe Schulterbreite 96 eines Nutzers. Dies ist mit anderen Worten der Versatz 92 zwischen der Bearbeitungseinheit 38 bzw. dem Schneidkopf 42, insbesondere der Rotationsachse 60 der Schneideinheit 48 und einer Mitte der Griffeinheit 12 bzw. der Schwenkeinheit 20. Damit kann ein Nutzer bequem entlang beispielsweise einer Mauer geradeaus laufen, während der Schneidkopf 42 nach links verlagert ist. Der Winkel 98 zwischen der Parallelebene 86 bzw. der Vorzugslaufachse 90 und der zumindest projizierten Längsachse 100 des Hauptrohres 22 beträgt rund 45°. Er kann selbstverständlich auch variieren.

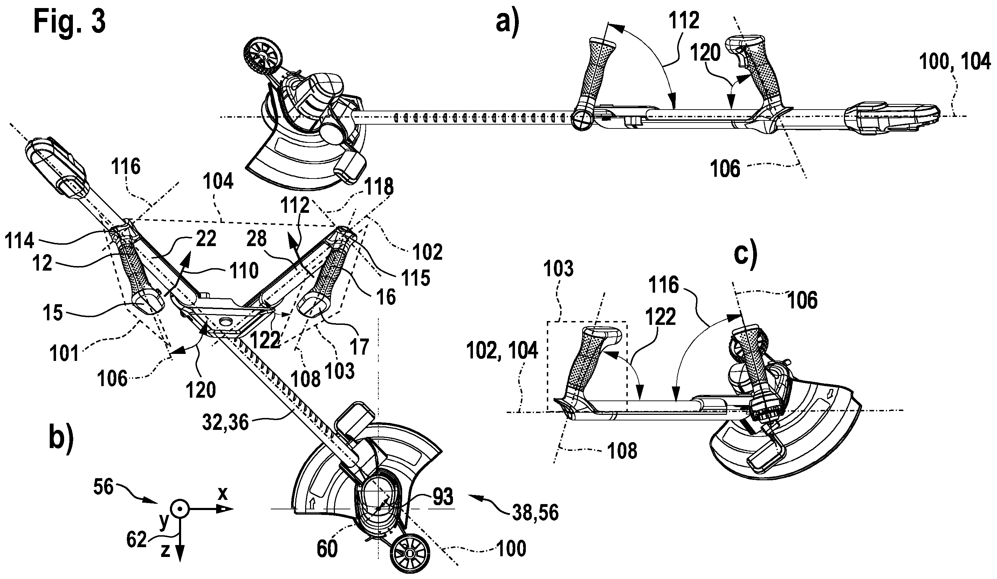

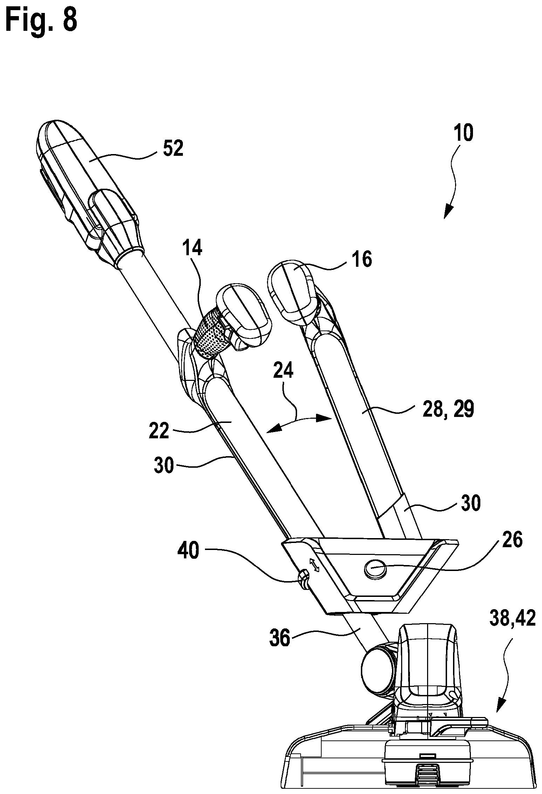

Figur 3 zeigt den Rasentrimmer 10 in drei Ansichten a), b), c) mit zusätzlich eingezeichneten Handgriffsebenen 101, 103 und eine Ebene 104 die als Handgriffsschwenkebene bezeichnet werden kann. Bezugszeichen sind für Gleichteile aus der Figur 1 analog zu Figur 2 im Wesentlichen nicht vergeben. Die Längsachse 100 des Hauptrohres 22, bzw. der Distanzeinheit 32, bzw. des weiteren Rohres 36, an dem der erste Handgriff 14 angeordnet ist; und die Längsachse 102 des Rohres 28, an dem der zweite Handgriff 16 angeordnet ist, spannen die Ebene 104 auf. Entlang dieser Ebene 104 oder in einer zumindest dazu parallelen Ebene ist auch das Rohr 28 schwenk- bzw. klappbar ausgebildet. Es lässt sich zwischen einer Arbeitsposition und einer Lager- oder Transportposition verschwenken bzw. klappen (vgl. hierzu Figur 8). Der dabei überstrichene Winkel ist spitz. Im ausgeklappten Zustand beträgt der Winkel 84 rund 60°, im zusammengeklappten Zustand weniger als 20°, (gemäß Figur 8 rund 10°). Prinzipiell sind auch zusätzliche Schwenk- bzw. Klappwinkel denkbar in denen die Schwenkeinheit 20 verrastet. Dadurch könnte der Griffabstand der Handgriffe 14, 16 an unterschiedliche Personen angepasst werden, beispielsweise in Abhängigkeit der Schulterbreite 96 des Nutzers oder eine in Abhängigkeit unterschiedlicher Befindlichkeiten komfortablen Handstellung oder dergleichen.

Eine durch den ersten Handgriff 14 verlaufende Längsachse 106 und eine durch den zweiten Handgriff 16 verlaufende Längsachse 108 sind nicht normal zur Ebene 104 angeordnet. Sie sind also nicht parallel. Vielmehr sind die Handgriffe 14, 16 mit ihre jeweiligen Längsachsen 106, 108 geneigt zur Ebene 104, insbesondere jeweils um zwei orthogonal zueinander verlaufende Längsachsen 100, 102, 116, 118 geneigt ausgebildet. Die Längsachsen 100, 102 kommen innerhalb der Ebene 104 zum Liegen. Zum einen sind die Handgriffe 14, 16 um die Längsachsen 100 und 102 einander zu geneigt. Der Neigungswinkel 110 bzw. 112 zwischen der Ebene 104 und den Längsachsen 106, 108 des jeweiligen Handgriffs 14, 16 beträgt rund 60°-85°, insbesondere rund 75°. Dieser Neigungswinkel 110, 112 entspricht einem Neigungswinkel um die Längsachsen 100 bzw. 102. Ferner sind die Handgriffe 14, 16 geneigt, um eine Normale zur jeweiligen Längsachse 100, 102 des Hauptrohres 22 bzw. des Rohres 28 und innerhalb der Ebene 104 verlaufende Längsachsen 116, 118 (könnten auch als Hilfs- oder Orientierungslängsachse bezeichnet werden). Diese Winkel 120, 122 betragen ebenfalls jeweils rund 60°-85°, insbesondere rund 75°. Salopp formuliert sind die Handgriffe 14, 16 bezogen auf deren frei Handgriffenden 15, 17 also einerseits einander zu geneigt und/(oder) andererseits in Richtung der Bearbeitungseinheit 38 oder der Schwenkeinheit 20 geneigt. Oder anders ausgedrückt sind die freie Handgriffenden 15, 17 einander insbesondere x-/v-förmig zugerichtet und/oder die unfreie Handgriffenden 19, 21 sind mittels der Verbindungseinheit 18, insbesondere der Schwenkeinheit 20, v-förmig verbunden. Dadurch wird eine angenehme Ergonomie für den Anwender erzielt. Legen Sie als Leser dieser Patentanmeldung bzw. als Gedankenspiel Ihre Hände etwa schulterbreit oder etwas enger in den Schoß oder auf die Oberschenkel. Sie stellen fest, dass dies einer entspannten Orientierung der Hände entspricht - in etwa so wird dieser Rasentrimmer 10 oder Freischneider gegriffen. Genau darin liegt der Vorteil gegenüber sogenannten Kuhhornlenkern, welche prinzipiell höher und breiter gehalten werden und deren Grifflängsachsen normalerweise parallel zueinander ausgerichtet sind. Zudem sind die Handgriffe 14, 16 typischerweise beim Kuhhornlenker weiter beabstandet.

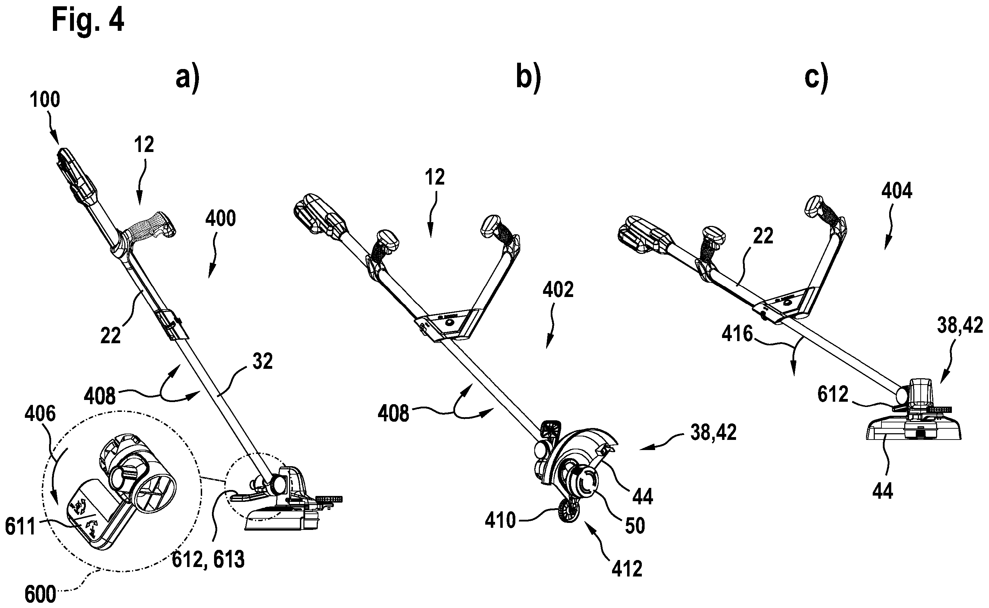

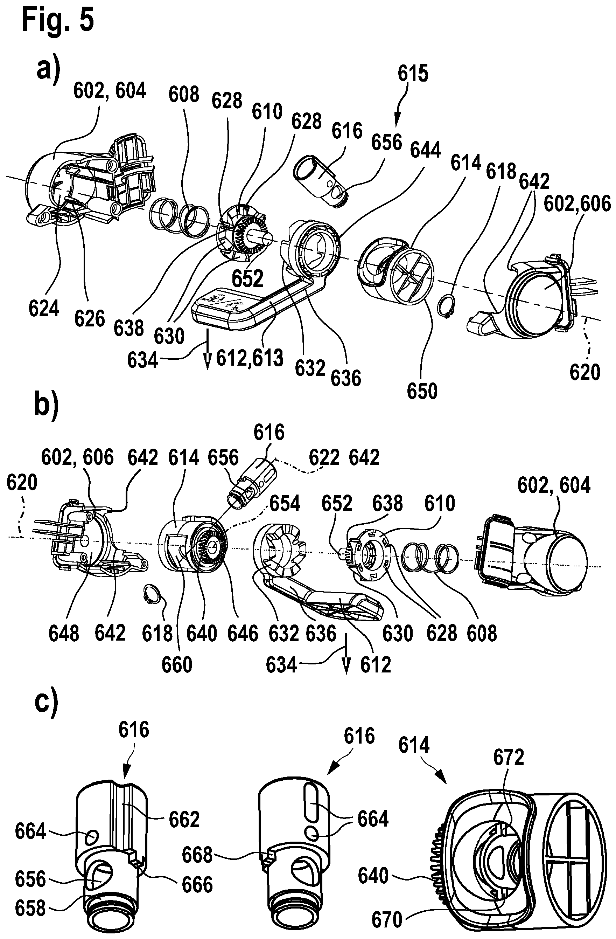

Figur 4 zeigt den Rasentrimmer 10 in drei Anordnungen a), b), c). Links (Ansicht a)) in der Horizontalschnittkonfiguration 400 (vgl. auch Fig. 1, 2 und 3). Mittig (Ansicht b)) in einer Kantenschneidkonfiguration 402. Rechts (Ansicht c)) in einer Flachschnittkonfiguration 404, also einer Konfiguration in der der Platz nach oben bzw. eine Höhe begrenzt ist, um beispielsweise unter Gegenständen wie Tischen, einer Hollywoodschaukel oder dergleichen, Horizontalschnitte durchführen zu können. Bezugszeichen sind für Gleichteile aus den vorherigen Figuren im Wesentlichen nicht vergeben. Zur Erreichung der Kantenschneidkonfiguration betätigt ein Benutzer oder Anwender das in der Figur 5 näher beschrieben Pedal 612 in Richtung des Pfeils 406 und dreht dann typischerweise die Griffeinheit 12 um die Längsachse 100 des Hauptrohres 22 bzw. der Distanzeinheit 32 in Richtung des Pfeils 408 um 180°. Dadurch dreht sich die Griffeinheit 12 und deren Handgriffe 14, 16 weisen beispielsweise zum Boden. Wenn der Nutzer nun die Griffeinheit 12 in seine Ausgangsstellung bzw. Verwendungsstellung überführt ist die Bearbeitungseinheit 38 bzw. der Schneidkopf 42 derart ausgerichtet bzw. orientiert, dass er zum Kantenschneiden einsetzbar ist - sprich in der Kantenschneidkonfiguration 402 gemäß Ansicht b). Der Schneidfaden 44 kann nun in einer vertikal ausgerichteten Ebene rotieren. Das Stützrad 410 bzw. die Schnittdistanzeinheit 412 beabstandet die Spule 50 ausreichend vom Untergrund (hier nicht dargestellt), so dass ein ideales Kanten-Trimmen oder -Schneiden erfolgen kann und der Schneidfaden 44, alternativ auch das Schneidmesser (beim Freischneider), nicht über die Maße verschlissen wird. So wird auch eine ausreichend freie Länge des Schneidfadens 44 zur Erzielung einer hohen Schnittfadengeschwindigkeit an dessen Ende und folglich eine hohe Schnittgüte sichergestellt. Die Schnittdistanzeinheit 412 bzw. das Stützrad 410 dienen auch der Führung und dem reibungsarmen Abrollen über dem Untergrund. Das Stützrad 410 kann aber auch in der Horizontalschnittkonfiguration 400 oder Flachschnittkonfiguration 404 entlang einer Kante, einer Mauer oder einem anderen Gegenstand (hier nicht dargestellt) z.B. Baum, der idealen Schnittdistanzierung des Schneidkopfes 42 vom Gegenstand dienen. Dadurch kommt es zu weniger Verschleiß, insbesondere des eingesetzten Werkzeugs (Schneidfaden 44 oder Messer beim Freischneider) und die Bedienung wird vereinfacht bzw. intuitiver. Die Flachschnittkonfiguration 404 kann ebenfalls durch Betätigung des Pedals 612 und ein Verschwenken des Hauptrohres 22 bzw. der Griffeinheit 12 relativ zur Bearbeitungseinheit 38 bzw. dem Schneidkopf 42 in Richtung des Pfeils 416, erzielt werden. Das Hauptrohr 22 und die Griffeinheit 12 kommen dadurch näher zum Boden, während der Schneidfaden 44 nach wie vor in einer Horizontalebene rotieren kann. Die hier nicht gezeigten Winkel 80 zwischen der Längsachse 100 des Hauptrohres 22 und der Bearbeitungsebene 82 (vgl. auch Fig. 2, Ansicht a) beträgt in der Kantenschneidkonfiguration 402 rund 36° und der Flachschnittkonfiguration 404 rund 24°, kann aber auch andere Werte annehmen. Das Pedal 612 wird um rund 20° beim betätigen verschwenkt.

Figur 5 zeigt eine Schwenk- und Drehvorrichtung 600 in einer ersten Ansicht a) und einer Rückansicht dazu b), jeweils in einer Explosionsdarstellung. Die hier dargestellten Hauptbauteile sind: das Gehäuse 602, aufweisend zwei Gehäuseschalen 604 und 606; eine Feder 608; eine Kupplung 610; ein Pedal 612 als Auslöseelement; eine Nabe 614; ein Verbinder 616, der auch als Distanzeinheitsverbinder oder Endanschlag bezeichnet werden kann; und ein Sicherungsmittel 618. Die Bauteile sind im Wesentlichen entlang einer Hauptachse 620 (Schwenkachse) angeordnet. Insbesondere orthogonal zu dieser, verläuft eine weitere Achse 622 (Drehachse). Diese weitere Achse 622 entspricht im vorliegenden Fall auch der Längsachse 100 der Distanzeinheit 32. Die Hauptachse 620 und die weitere Achse 622 definieren die Drehfreiheitsgrade der Schwenk- und Drehvorrichtung 600 bzw. der Bearbeitungseinheit 38 relativ zur Griffeinheit 12 bzw. der Distanzeinheit 32. Es ist vorgesehen die Bearbeitungseinheit 38 um die Hauptachse 620 zu verschwenken (Höhenanpassung durch Verschwenken, bzw. Einstellung des Winkels 80 auf die Kantenschneidkonfiguration 402 vgl. Fig. 4, Ansicht b) - hier rund 36°; bzw. der Flachschnittkonfiguration 404, Winkel 80 dabei rund 24°, vgl. Fig. 4 c). Ferner ist zugleich oder nacheinander vorgesehen, in jedem Fall ausgelöst mit dem gemeinsamen Auslöseelement, nämlich dem Fußpedal 612, die Bearbeitungseinheit 38 um die weitere Achse 622 zu verdrehen (zur Erreichung Kantenschneidfunktion Kantenschneidkonfiguration 402 vgl. Fig. 4, Ansicht b).

Ausgehend von Figur 5, Ansicht a) und b), sind an der ersten Gehäuseschale 604 ausgehend von einer Wandung 624, mehrere Rippen 626 angeordnet, die parallel zu Hauptachse 620 verlaufen. Diese Rippen 626 korrespondieren mit Ausnehmungen 628 in der Kupplung 610. Sie dienen der Rotationshemmung der Kupplung 610 relativ zum Gehäuse 602; sie ermöglichen aber eine Axialverschiebung der Kupplung 610 relativ zum Gehäuse 602. Die Kupplung 610 weist Schrägflächen 630 auf, die mit Schrägflächen 632 des Pedals 612 korrespondieren bzw. Schrägflächenpaare bilden. Durch Betätigen des Pedals 612 in Richtung des Pfeils 634 kommt es über dem Arm 636 zu einer Verdrehung der Schrägflächen 632 relativ zu den anderen an der Kupplung 610 angeordneten Schrägflächen 630. Folglich verlagert sich die Kupplung entgegen der Rückstell- oder Vorspannkraft der Feder 608 axial in Richtung der Gehäuseschale 604 bzw. deren Wandung 624.

An der Kupplung 610 angeordnete Zähne 638, insbesondere Zähne 638 einer Steckverzahnung, werden außer Eingriff mit korrespondierenden Zähnen 640 an der Nabe 614 gebracht. Folglich ist eine Verschwenkung der Nabe 614 um die Hauptachse und relativ zum Gehäuse 602 möglich, solang die Zahnpaare 638 und 640 außer Eingriff sind. Die Verschenkung kann beispielweise begrenzt werden durch die Kontur der Gehäuseöffnung 642. Die Nabe 614 ist relativ zum Pedal 612 und der Gehäuseschale 606 verdrehbar um die Hauptachse 620 ausgebildet (hier Gleitlagerung). Dazu Berührt die Pedalfläche 644 die Nabenfläche 646 und die Gehäusefläche 648 die Nabenfläche 650 (axial bezogen auf die Hauptachse 620). Zur Ermöglichung der Verdrehung der Bearbeitungseinheit 38, insbesondere zur Ermöglichung der Kantenschneidfunktion beim Rasentrimmer 10 oder Freischneider, ist die Nabe 614 dazu vorgesehen den Verbinder 616 rotatorisch drehbar um die Achse aufzunehmen. Die axial verlagerbare Kupplung 610 weist nebst der Zähne 638 auch einen Bolzen 652 auf. Der Bolzen 652 ist axialverschieblich zur Nabe 614 durch deren Gleitfläche 654 geführt. Er ist dazu vorgesehen in die Ausnehmung 656 des Verbinders zu greifen, um eine Verdrehung des Verbinders 616 um die Achse 622, wahlweise in einer 0° und einer 180° Stellung, zu verhindern. Sofern das Pedal 612 die Kupplung 610 axial gegen die Federkraft in Richtung der Gehäuseschale 604 verlagert, wird sowohl die Steckverzahnung der Zähne 638, 640 der Kupplung 610 und Nabe 614 als auch die Verbindung von dem Bolzen 652 und der Ausnehmung 656 aufgehoben. Dadurch kann die Bearbeitungseinheit relativ zur Distanzeinheit mittels einem Auslöseelement (hier dem Pedal 612) um zwei Achsen (620, 622), insbesondere zwei orthogonal zueinander verlaufende Achsen (620, 622), verschwenkt und verdreht werden. Alternativ sind auch andere Auslöseelemente denkbar. Der Verbinder 616 ist axial in Richtung der weiteren Achse 622 gegen eine Verlagerung relativ zur Nabe 614 bzw. relativ zur Hauptachse 620 mit dem Sicherungsmittel 618 gesichert. Das Sicherungsmittel 618 ist ein Seegering der in der Nut 658 des Verbinders 616 zum Liegen kommt und sich an der Fläche 660 der Nabe 614 abstützt.

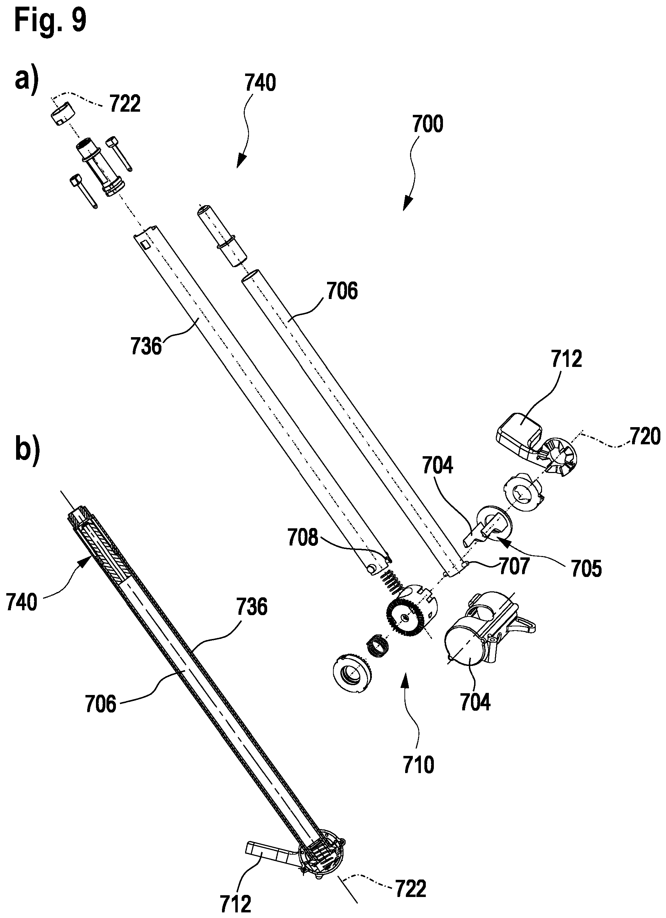

Wie in der unteren Ansicht c) zu sehen, wo der Verbinder 616 in zwei (180° verdreht) und die Nabe 614 (rechts) in einer Detailansicht zu sehen sind, weist der Verbinder Rastmittel 662 (hier in Form einer Längsnut) und Ausnehmungen 664 (die zumindest teilweise zur Kraft- und/oder Formschlüssigen Verbindung mit der Distanzeinheit 32 vorgesehen) sind auf. Ferner weist der Verbinder 616 zwei weitere Anschlagflächen 666, 668 auf die mit Anschlagflächen 670 und 672 an der Nabe 614 korrespondieren. Dadurch wird beim Verdrehen der Bearbeitungseinheit 38 relativ zur Distanzeinheit 32 bzw. zur Griffeinheit 12 um die weitere Achse 622 bzw. die Längsachse 100, ein Anschlag für die 0° und die 180°-Stellung bereitgestellt, was die Verstellung intuitiv, einfach und sicherer macht. Eine Arretierung des Dreh- und Schwenkmechanismus ist nur möglich, wenn die Zahnpaare 638, 640 und der Bolzen 652 und die Ausnehmung 656 in der zueinander korrespondierenden Ausrichtung sind. Nebst weiteren Möglichkeiten ist prinzipiell aber auch vorstellbar eine weitere Ausnehmung z.B. in der 90° und 270° des Verbinders 616 und/oder möglicherweise eine Reibschlussverbindung anstatt der Steckverzahnung oder des Bolzens vorzusehen um eine noch größere Vielzahl an Einstellpositionen beim Schwenken und Drehen der Handwerkzeugmaschine zu ermöglichen. Ebenso ist vorstellbar, dass das Auslöseelement beispielsweise über einen Kabelzug, ein Gestänge, einen Keil oder dergleichen auch die Teleskopeinstellung der Distanzeinheit auslöst. (Vergleiche hierzu Fig. 9). So könnten mit nur einem Auslöseelement die Höhenverstell- (Distanz von der Griffeinheit zur Bearbeitungseinheit), die Schwenkfunktion und die Drehfunktion bereitgestellt werden. Dieses Auslöseelement könnte beispielsweise auch an der Griffeinheit, der Distanzeinheit oder der Bearbeitungseinheit angeordnet sein. Alternativ ist aber auch vorstellbar, dass mit nur einem Auslöseelement, das zwischen der Bearbeitungseinheit und der Distanzeinheit wirkt, die Höhenverstellung entlang der Längsachse der Distanzeinheit (also die Verstellung der Distanz zwischen Griffeinheit und Bearbeitungseinheit) mit der Schwenkfunktion und/oder der Drehfunktion kombiniert werden. Ebenso ist denkbar, dass die Schwenkfunktion mit der Höhenverstellfunktion durch ein gemeinsames Auslöseelement kombiniert werden.

Somit ist die Bearbeitungseinheit 38 relativ zur Distanzeinheit 32 mittels einem (gemeinsamen) Auslöseelement (hier dem Fußpedal 612, prinzipiell aber auch einem beliebigen anderen gemeinsamen Auslöseelement) um zwei Achsen (nämlich die Hauptachse 620 und die weitere Achse 622), insbesondere zwei orthogonal zueinander verlaufende Achsen, verdrehbar (zueinander) ausgebildet ist. Zur Realisierung einer Höhenverstellung der Griffeinheit 12, insbesondere mittels einer Schwenkfunktion um den Winkel 80 der Distanzeinheit 32 relativ zur Bearbeitungseinheit 38, (bevorzugt durch Verschwenken um eine Schwenkachse hier der weiteren Achse 622 quer zur Längsachse 100 der Distanzeinheit 32 und zur Realisierung einer Kantenschneidkonfiguration 402 durch Verdrehung der Bearbeitungseinheit 38 relativ zur Distanzeinheit 32, insbesondere um die Längsachse 100 der Distanzeinheit 32. Das Auslöseelement (hier das Fußpedal 612) ist dazu vorgesehen sowohl eine Getriebezahnverrastung (bzw. Steckverzahnung der Zähne 638, 340) als auch eine Bolzenverrastung (des Bolzens 652 in die Ausnehmung 656) zumindest zu lösen, insbesondere auch wieder zu verrasten.

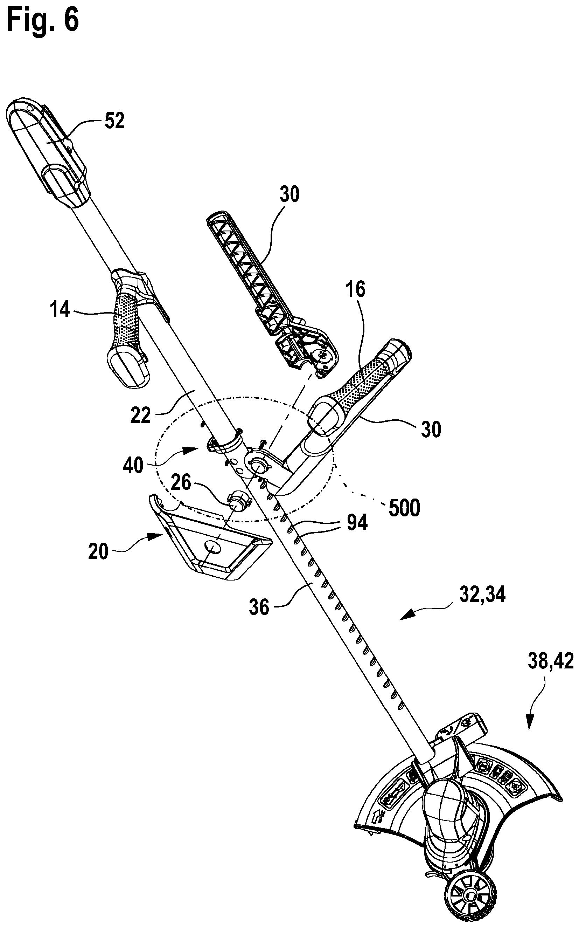

Figur 6 zeigt den Rasentrimmer 10 oder Fadenschneider mit der Schwenkeinheit 20 zur v-förmigen Ausrichtung der Griffeinheit 12 und der Verstellvorrichtung 40 zu Teleskopierung bzw. Höhenverstellung in einer Explosionsdarstellung. Gleichteile aus Figur 1 oder den anderen Figuren sind nicht erneut beschrieben.

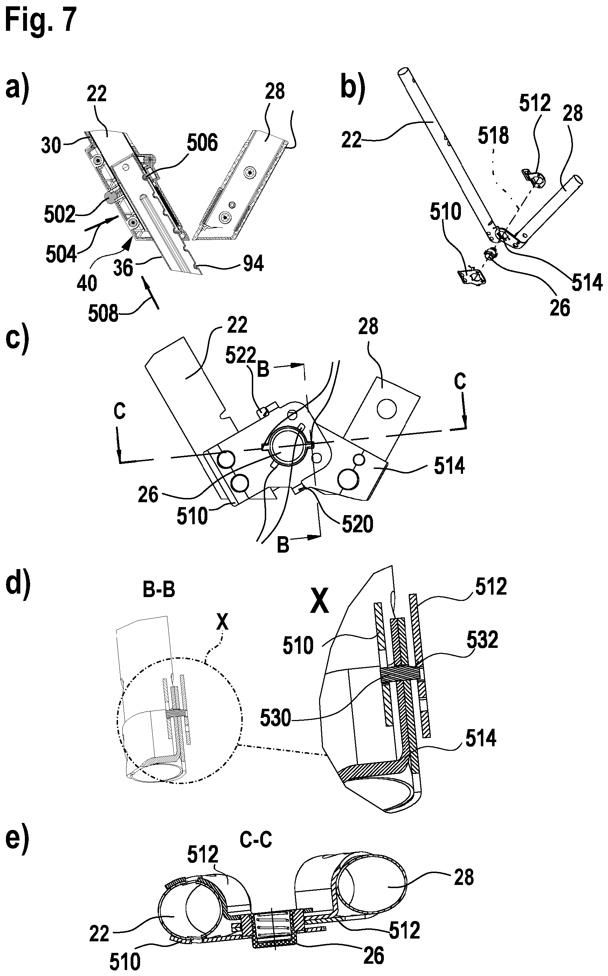

Figur 7 zeigt einen Ausschnitt 500 aus Figur 6 in verschiedenen Ansichten. In Ansicht a) ist die Verstellvorrichtung 40 bzw. der Höhenverstellmechanismus in einer Schnittansicht dargestellt. Das Auslöseelement 502 ist Federvorgespannt und wird durch darauf ausgeübten Druck in Richtung des Pfeils 504 verlagert. Dadurch hebt sich ein zumindest mit dem Auslöseelement 502 verbundenes Rastmittel 506 aus einem korrespondierenden Formschlusselement 94 an dem Rohr 36. Das Rohr kann nun in Richtung des Pfeils 508 relativ zum Hauptrohr 22 verschoben werden.

Ansicht b) der Figur 7, sowie die weiteren Ansichten c), d) und e) zeigen Bauteile der Schwenkeinheit 20. Am Hauptrohr 22 sind die Klemmbleche 510, 512 fixiert. Am Rohr 28 ist ein Klemmblech 514 fixiert. Sie weisen jeweils eine Ausnehmung auf, durch die die gemeinsame Schwenkeinheitsrotationsachse 518 verläuft. Ferner weisen die Klemmbleche 510, 512 und das Klemmblech 514 korrespondierende Anschlagelemente 520, 522 auf, jeweils versetzt um 180°. Diese dienen als Endanschlag in der geöffneten v-förmigen Position der Griffeinheit 12. Das Auslöseelement 26 weist Klemmittel 530 auf, die zu Formschlusselementen 524, 526, 528 an den Klemmblechen 510, 512, 514 korrespondieren. Dadurch kann die Verstellvorrichtung 40 durch betätigen des federvorgespannten Auslöseelements 26 in zwei Positionen verrastet werden (nämlich einmal der V-förmigen Griff-, Schwenk-, oder Verbindungsanordnungsposition gemäß beispielsweise Figur 1, oder der zusammengeklappten Griff-, Schwenk-, oder Verbindungsanordnungsposition gemäß Figur 8. Besonders daran ist aber, dass die Klemmmittel - eines davon ist in der Vergrößerung X des Schnitts B-B in Ansicht d) zu sehen, am seinem distalen Ende eine Phase 532 aufweist. Diese bewirkt in der v-förmig geöffneten Position ein Verklemmen zwischen dem Klemmittel 530 mit korrespondierenden Formschlusselementen 524, 526, 528 und den Anschlagelementen 520, 522. Dadurch wird der Griffeinheit 12 bzw. der Verbindungseinheit 18, bzw. der Schwenkeinheit 20 das Spiel in der v-förmig ausgeklappten Konfiguration genommen. Die verschwenkbare Griffeinheit 12 ist damit in der Arbeitsstellung möglichst spielfrei gelagert, was den Komfort und die Sicherheit erhöht.

Figur 8 zeigt den Rasentrimmer 10 in einer kompakten Lager- oder Transportkonfiguration. Das Rohr 36 ist relativ zum Hauptrohr 22 ganz eingeschoben. Die Griffeinheit 12, bzw. Verbindungs- oder Schwenkeinheit 18, 20 ist zusammengeklappt. Die weiteren Elemente sollten in Zusammenschau mit den vorherigen Figuren selbsterklärend sein.

Figur 9 zeigt, wie bereits in der Beschreibung von Figur 5 angedeutete, eine alternative Schwenk-, Dreh-, und Höhenverstellvorrichtung 700, bei der alle drei oder sogar eine vierte Verstellungen (zusätzlich der Schwenkwinkel der Griffeinheit 12) mittels des Fußpedals 712 ausgelöst werden. Eine Verlagerung des Fußpedals 712 bewirkt eine axiale Verlagerung der zusätzlichen Kupplung 704 entlang der Hauptachse 720 nach links. Durch die Kontur 705 kommt es zu einer axialen Verlagerung der Stange 706, so dass deren Formschlusselemente 707 außer Eingriff 708 mit dem Rohr 736 gebraucht werden, wobei das Rohr 736 zugleich ein Rohr 736 der Distanzeinheit 32 gemäß Fig. 1 sein kann. Die Stange 706 kann zugleich einen alternativen Höhenverstellmechanismus 740 und/oder einen hier nicht gezeigten Schwenkmechanismus der Griffeinheit 12 beispielsweise aus Figur 1 lösen bzw. freigeben. Nun ist eine Rotation des Rohres 736 um dessen Längsachse 100 beispielsweise zur Ermöglichung der Kantenschneidkonfiguration 402 möglich. Ferner wird der Höhenverstellmechanismus 740 gelöst. Zudem ist ein Verschwenken des Rohres 736 um die Hauptachse 720 möglich, da die Kupplung 710 ausser Eingriff gebracht wurde.

## Patentansprüche

1. Handwerkzeugmaschine in Form eines Rasentrimmers (10) oder Freischneiders, aufweisend eine Griffeinheit (12) und eine Bearbeitungseinheit (38), welche über eine Distanzeinheit (32) miteinander verbunden und zueinander beabstandet sind, wobei die Distanzeinheit (32) eine Mittenachse bzw. Längsachse (100) aufweist, und wobei die Bearbeitungseinheit (38) eine Rotationsachse (60) aufweist, um die ein Einsatzwerkzeug, insbesondere ein Schneidfaden (44) oder Schneidmesser, rotieren kann, wobei zumindest in einer Horizontalschnittkonfiguration (58, 400) des Rasentrimmers (10) oder Freischneiders, die Mitten- bzw. Längsachse (100) und die Rotationsachse (60) einen Achsversatz (93) zueinander aufweisen und/oder sich nicht schneiden **dadurch gekennzeichnet, dass** die Griffeinheit (12) eine V-förmige Anordnung mit einem Öffnungswinkel (84) aufweist, wobei eine auf die Horizontalschnittebene (82, 83) projizierte Winkelhalbierende (87) des Öffnungswinkels (84) parallel zu einer Hauptschnittrichtung (62) des Schneidkopfs (42) ausgerichtet ist oder dass zumindest eine auf die Horizontalschnittebene (82, 83) projizierte Winkelhalbierende des Öffnungswinkels (84) eine Hauptschnittrichtungsachse (90) vorgibt, wobei der Schneidkopf (42) einen Parallelversatz (92) zur Hauptschnittrichtungsachse (90) aufweist, insbesondere einen Parallelversatz (92) zur Hauptschnittrichtungsachse (90) von ≥ ½ mal den Griffabstand oder ≥ ½ mal eine Schulterbreite (96) eines Benutzersund/oder ≥ 100 mm, insbesondere ≥ 150 mm, besonders bevorzugt ≥ 200 mm und/oder zunehmender bei verlängerter Teleskopierung der Teleskopeinheit (34), **dadurch gekennzeichnet, dass** die Mittenachse bzw. Längsachse (100) die Bearbeitungseinheit (38) schneidet.

2. Handwerkzeugmaschine nach Anspruch 1, **dadurch gekennzeichnet, dass** eine Winkelhalbierende (87) einer V-förmig ausgerichteten Griffeinheit (12) und die Rotationsachse (60) einen Achsversatz aufweisen und/oder eine Ebene (86), welche durch eine Vertikale und die Winkelhalbierende (87) aufgespannt wird, einen Versatz (92) zur Rotationsachse (60) aufweist.

3. Handwerkzeugmaschine nach einem der vorhergehenden Ansprüche, **dadurch gekennzeichnet, dass** der Schneidkopf (42) abgewinkelt zu einer Bearbeitungseinheitsebene (85) angeordnet ist, welche zumindest in einer Horizontalschnittkonfiguration (58) des Rasentrimmers (10) durch eine die Längsachse (100) des Hauptrohres (22) schneidende Parallelachse zur Rotationsachse (60) der Bearbeitungseinheit (38) und die Längsachse (100) des Hauptrohres (22) bzw. der Distanzeinheit (32) aufgespannt wird, insbesondere aufweisend einen Winkelversatz (98) von, bzw. abgewinkelt ist um 15-75°, bevorzugt um 45°.

4. Handwerkzeugmaschine nach einem der vorhergehenden Ansprüche, **dadurch gekennzeichnet, dass** die Griffeinheit (12) zwei Handgriffe (14, 16) aufweist, wobei freie Handgriffenden (15, 17) einander X-/V-förmig zugerichtet sind und/oder unfreie Handgriffenden (114, 115) mittels einer Verbindungseinheit (18), insbesondere einer Schwenkeinheit (20), V-förmig verbunden sind.

5. Handwerkzeugmaschine nach einem der vorhergehenden Ansprüche, **dadurch gekennzeichnet, dass** ein Schwerpunkt der Handwerkzeugmaschine in einem Bereich (53) einer zumindest V-förmig ausrichtbaren Verbindungseinheit (18) der Handgriffe (12), insbesondere im Bereich (53) einer Schwenkeinheit (20) und/oder entlang der Längsachse des Hauptrohres (22) zum Liegen kommt.

6. Handwerkzeugmaschine nach einem der vorhergehenden Ansprüche, **dadurch gekennzeichnet, dass** zur Herstellung eines zumindest im Wesentlichen um die Längsachse (100) eines Hauptrohres (22) wirkenden Momentengleichgewichts, insbesondere asymmetrisch, die Bearbeitungseinheit (38) zur einen und die Griffeinheit (12) und/oder der zweite Handgriff (16) und/oder die Verbindungseinheit (18) und/oder die Schwenkeinheit (20) zur anderen Seite des Hauptrohres verlagert angeordnet sind.

## Claims

1. Hand-held power tool in the form of a lawn trimmer (10) or brush cutter, having a handle unit (12) and a treatment unit (38) which are connected to one another, and spaced apart from one another, via a distance unit (32), wherein the distance unit (32) has a central axis or longitudinal axis (100), and wherein the treatment unit (38) has an axis of rotation (60) about which an insert tool, in particular a cutting line (44) or cutting blade, can rotate, wherein, at least in a horizontal cutting configuration (58, 400) of the lawn trimmer (10) or brush cutter, the central or longitudinal axis (100) and the axis of rotation (60) have an axis offset (93) from one another and/or do not intersect, **characterized in that** the handle unit (12) has a V-shaped arrangement with an opening angle (84), wherein an angle bisector (87) of the opening angle (84) that is projected onto the horizontal cutting plane (82, 83) is oriented parallel to a main cutting direction (62) of the cutting head (42), or **in that** at least an angle bisector of the opening angle (84) that is projected onto the horizontal cutting plane (82, 83) specifies a main cutting direction axis (90), wherein the cutting head (42) has a parallel offset (92) from the main cutting direction axis (90), in particular a parallel offset (92) from the main cutting direction axis (90) of ≥ 1/2 times the handle spacing or ≥ 1/2 times a shoulder width (96) of a user and/or ≥ 100 mm, in particular ≥ 150 mm, particularly preferably ≥ 200 mm and/or that increases with increasing telescopic length of the telescope unit (34), **characterized in that** the central axis or longitudinal axis (100) intersects the treatment unit (38).

2. Hand-held power tool according to Claim 1, **characterized in that** an angle bisector (87) of a handle unit (12) with a V-shaped orientation and the axis of rotation (60) have an axis offset, and/or a plane (86) spanned by a vertical and the angle bisector (87) has an offset (92) from the axis of rotation (60).

3. Hand-held power tool according to either of the preceding claims, **characterized in that** the cutting head (42) is arranged angled away from a treatment unit plane (85) which, at least in a horizontal cutting configuration (58) of the lawn trimmer (10), is spanned by an axis which is parallel to the axis of rotation (60) of the treatment unit (38) and which intersects the longitudinal axis (100) of the main tube (22) and by the longitudinal axis (100) of the main tube (22) or of the distance unit (32), in particular having an angular offset (98) of, or being angled away by, 15-75°, preferably 45°.

4. Hand-held power tool according to one of the preceding claims, **characterized in that** the handle unit (12) has two handles (14, 16), wherein free handle ends (15, 17) are directed towards one another in an X-shaped/V-shaped manner, and/or non-free handle ends (114, 115) are connected in a V-shaped manner by means of a connecting unit (18), in particular a pivoting unit (20).

5. Hand-held power tool according to one of the preceding claims, **characterized in that** a centre of gravity of the hand-held power tool comes to lies in a region (53) of a connecting unit (18) of the handles (12), which connecting unit is able to have at least a V-shaped orientation, in particular in the region (53) of a pivoting unit (20) and/or along the longitudinal axis of the main tube (22).

6. Hand-held power tool according to one of the preceding claims, **characterized in that**, for producing a moment equilibrium at least substantially about the longitudinal axis (100) of a main tube (22), in particular asymmetrically, the treatment unit (38) is arranged displaced to one side of the main tube and the handle unit (12) and/or the second handle (16) and/or the connecting unit (18) and/or the pivoting unit (20) are/is arranged displaced to the other side of the main tube.

## Revendications

1. Outil-machine à main sous la forme d'un coupe-herbe (10) ou d'une débroussailleuse, comprenant une unité formant poignée (12) et une unité de traitement (38), qui sont reliées entre elles par une unité d'espacement (32) et qui sont espacées l'une de l'autre, l'unité d'espacement (32) comprenant un axe central ou axe longitudinal (100), et l'unité de traitement (38) comprenant un axe de rotation (60) autour duquel est apte à tourner un outil de travail, en particulier un fil de coupe (44) ou une lame de coupe, au moins dans une configuration de coupe horizontale (58, 400) du coupe-herbe (10) ou de la débroussailleuse, l'axe central ou longitudinal (100) et l'axe de rotation (60) présentent un décalage d'axes (93) l'un par rapport à l'autre et/ou ne se croisent pas, **caractérisé en ce que** l'unité formant poignée (12) comprend un agencement en V avec un angle d'ouverture (84), une bissectrice (87) de l'angle d'ouverture (84) projetée sur le plan de coupe horizontal (82, 83) étant orientée parallèlement à une direction de coupe principale (62) de la tête de coupe (42) ou **en ce qu'**au moins une bissectrice de l'angle d'ouverture (84) projetée sur le plan de coupe horizontal (82, 83) définit un axe (90) de direction principale de coupe, la tête de coupe (42) comprenant un décalage parallèle (92) par rapport à l'axe (90) de direction principale de coupe, en particulier un décalage parallèle (92) par rapport à l'axe (90) de direction principale de coupe ≥ ½ fois la distance de la poignée ou ≥ ½ fois la largeur d'une épaule (96) d'un utilisateur et/ou ≥ 100mm, en particulier ≥ 150mm, de manière particulièrement préférée ≥ 200mm et/ou plus élevé en cas de déploiement télescopique de l'unité télescopique (34), **caractérisé en ce que** l'axe central ou l'axe longitudinal (100) est en intersection avec l'unité de traitement (38).

2. Outil-machine à main selon la revendication 1, **caractérisé en ce qu'**une bissectrice (87) d'une unité formant poignée (12) orientée en V et l'axe de rotation (60) présentent un décalage d'axes, et/ou un plan (86), qui est défini par une verticale et par la bissectrice (87), présente un décalage (92) par rapport à l'axe de rotation (60).

3. Outil-machine à main selon l'une des revendications précédentes, **caractérisé en ce que** la tête de coupe (42) est agencée de manière à former un angle par rapport à un plan (85) de l'unité de traitement, qui, au moins dans une configuration de coupe horizontale (58) du coupe-herbe (10), est fixé par un axe parallèle coupant l'axe longitudinal (100) du tube principal (22) par rapport à l'axe de rotation (60) de l'unité de traitement (38) et l'axe longitudinal (100) du tube principal (22) ou de l'unité d'espacement (32), comprenant en particulier un décalage angulaire (98) de, ou étant coudé de, 15 à 75°, de préférence de 45°.

4. Outil-machine à main selon l'une des revendications précédentes, **caractérisé en ce que** l'unité formant poignée (12) comprend deux poignées (14, 16), les extrémités libres des poignées (15, 17) étant orientées l'une vers l'autre selon une forme de X ou de V, et/ou les extrémités non libres des poignées (114, 115) étant reliées selon une forme de V au moyen d'une unité de liaison (18), en particulier d'une unité pivotante (20).

5. Outil-machine à main selon l'une des revendications précédentes, **caractérisé en ce qu'**un centre de gravité de l'outil-machine à main se situe dans une zone (53) d'une unité de liaison (18) des poignées (12) aptes à être orientée au moins en forme de V, en particulier dans la zone (53) d'une unité de pivotement (20) et/ou le long de l'axe longitudinal du tube principal (22).

6. Outil-machine à main selon l'une des revendications précédentes, **caractérisé en ce que**, pour obtenir un équilibre des moments agissant au moins essentiellement autour de l'axe longitudinal (100) d'un tube principal (22), en particulier de manière asymétrique, l'unité de traitement (38) est agencée de manière décalée vers un côté du tube principal et l'unité formant poignée (12) et/ou la deuxième poignée (16) et/ou l'unité de liaison (18) et/ou l'unité de pivotement (20) sont agencées de manière décalée vers l'autre côté du tube principal.
